# EUROPÄISCHE PATENTSCHRIFT

(11) **EP 0 747 254 B1**
(45) Veröffentlichungstag und Bekanntmachung des Hinweises auf die Patenterteilung: **17.01.2001**
(21) Anmeldenummer: 96108402.7
(22) Anmeldetag: 28.05.1996
(51) Int. Cl.: B60K 15/05

(54) **Tankverschluss, insbesondere an einem Kraftfahrzeug**
Tank closure, especially for vehicles
Fermeture de réservoir, notamment pour véhicule

(30) Priorität: 08.06.1995 DE 19520971
(43) Veröffentlichungstag der Anmeldung: 11.12.1996
(73) Patentinhaber: Bayerische Motoren Werke Aktiengesellschaft, 80788 München (DE); Ruetz, Stefan, 80636 München (DE)
(72) Erfinder: Krause, Günter, 82194 Gröbenzell (DE); Pollak, Georg, 82110 Germering (DE)

(56) Entgegenhaltungen:
- EP-A- 0 266 705
- DE-A- 4 242 228
- US-A- 1 949 523

## Beschreibung

Die Erfindung betrifft einen Tankverschluß, insbesondere an einem Kraftfahrzeug, mit den im Oberbegriff des Patentanspruches 1 angegebenen Merkmalen.

Ein derartiger Tankverschluß ist durch die EP-A-0 266 705 bekannt, der ein drehbares Schließteil aufweist, das in einer Schließlage die Einfüllöffnung des Kraftstoffbehälters verschließt. Die Einfüllöffnung ist geöffnet, wenn das Schließteil in eine Winkellage verdreht ist, in der eine Durchtrittsöffnung in dem Schließteil mit der Einfüllöffnung fluchtet. Bei der Verstellbewegung des Schließteiles von der Schließlage in die Offenstellung und umgekehrt, wird die Durchtrittsöffnung in dem Schließteil auf einer etwa halbkreisförmigen Bahn bewegt. Nachdem das Schließteil unter axialer Vorspannung an einer ortsfesten Dichtmanschette anliegt, können sich beim Verdrehen des Schließteiles Bereiche der Dichtmanschette in die Durchtrittsöffnung entspannen, die anschließend beim weiteren Verdrehen des Schließteiles aus der Durchtrittsöffnung gedrängt werden. Die Reibbelastung der Dichtmanschette ist dadurch erhöht und zeigt bereits nach einer geringen Gebrauchszeit die Dichtfunktion beeinträchtigende Verschleißerscheinungen.

In der US-PS 1 949 523 ist die Einfüllöffnung eines Kraftstoffbehälters von einem Schieber verschließbar, der über einen Seilzug fembedienbar ist. Der Kraftstoffbehälter kann nur vom Fahrgastraum her manuell geöffnet und geschlossen werden. Ein Öffnen des Kraftstoffbehälters über eine automatische Tankeinrichtung ist nicht möglich.

Der Erfindung liegt die Aufgabe zugrunde, einen Tankverschluß nach dem Oberbegriff des Patentanspruches 1 anzugeben, der ein manuelles und automatisches Betanken ermöglicht, wobei die an der Einfüllöffnung vorgesehene Dichtung weniger beansprucht sein soll.

Diese Aufgabe ist durch die im Patentanspruch 1 angegebenen Merkmale gelöst. Eine manuelle oder von dem Einfüllarm einer automatischen Tankvorrichtung automatisch vorgenommene Drehbewegung des Betätigungselements wird über die Verstelleinrichtung in eine etwa geradlinige Verstellbewegung des Verschlußteiles übersetzt, das dadurch auf dem kürzesten Weg von der Einfüllöffnung weg in eine Offenstellung und umgekehrt in die Schließlage verstellt wird. Die an der Einfüllöffnung angeordnete und mit dem Schließteil zusammenwirkende Dichtung wird dadurch weniger beansprucht. Bei Verwendung einer Dichtungs-Entlastungseinrichtung, die anfangs beim Verdrehen des Betätigungselements von der Schließlage in die Offenstellung ein axiales Abheben des Verschlußteiles von der Dichtung bewirkt, kann die Beanspruchung der Dichtung noch vermindert werden, wodurch die Dichtung über die gesamte Nutzungsdauer des Tankverschlusses funktionsfähig bleiben kann. Die Verstelleinrichtung kann ein ortsfest drehbares Zahnrad aufweisen, das einerseits mit einer Innenverzahnung an einem Innenumfang des Betätigungselements und andererseits mit einer Zahnreihe an dem Verschlußteil kämmt. Ebenso kann die Verstelleinrichtung eine Kulissenführung oder dergleichen aufweisen, in die ein Zapfen bzw. Steg eingreift. Es sind auch andere Verstelleinrichtungen möglich, die beispielsweise einen Schwenkhebel und/oder ein Hebelgestänge zur Bewegungs- und Kraftübersetzung aufweisen.

Vorteilhafte Ausgestaltungen der Erfindung sind Gegenstand von Unteransprüchen.

Ein Ausführungsbeispiel der Erfindung wird anhand einer Zeichnung näher erläutert. Es zeigen
- Fig. 1: einen Querschnitt durch die Mittelachse der Einfüllöffnung entsprechend der Schnittlinie I-I in Fig. 3,
- Fig. 2: eine Fig. 1 entsprechende Ansicht gemäß der Schnittlinie II-II in Fig. 3 und
- Fig. 3: eine Draufsicht auf den Tankverschluß.

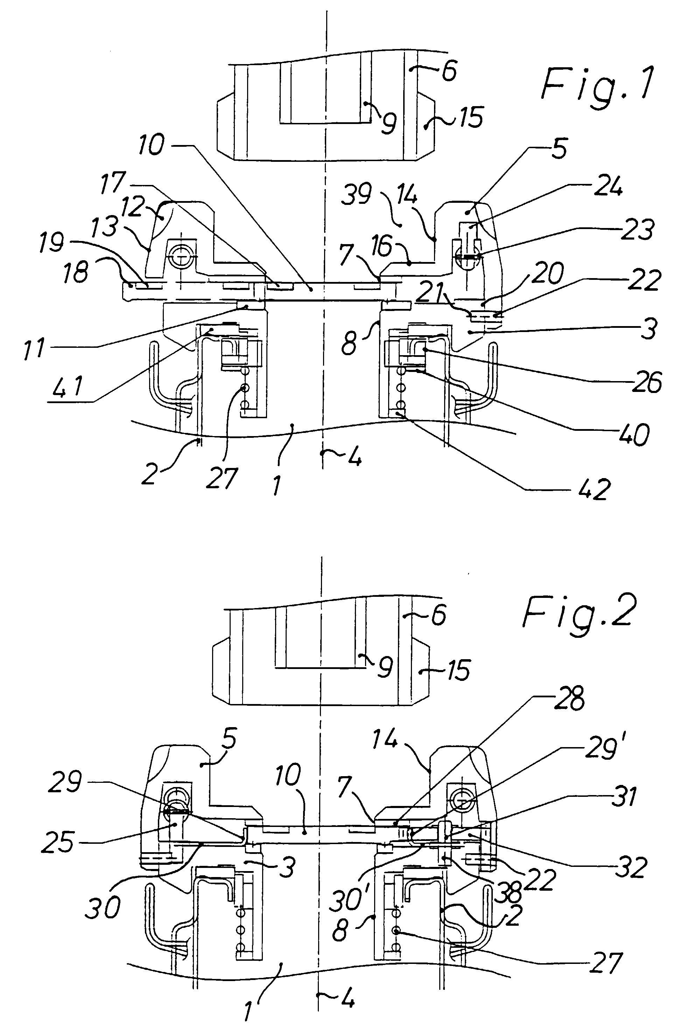

Der in Fig. 1 dargestellte Tankverschluß ist an der Einfüllöffnung 1 eines an einem Kraftfahrzeug vorgesehen Kraftstofftanks angeordnet und weist ein im Randbereich der Einfüllöffnung 1 befestigtes Auflageteil 3 auf. Die Einfüllöffnung 1 ist beispielsweise an dem vorstehenden Ende eines Rohrstutzens 2 an dem Kraftstofftank gebildet. Das Auflageteil 3 nimmt um die Mittelachse 4 der Einfüllöffnung 1 drehbar ein ringförmiges Betätigungselement 5 auf, das manuell und/oder von einem Einfüllarm 6 einer automatischen Tankvorrichtung in eine die Einfüllöffnung 1 freigebende Offenstellung und umgekehrt in eine die Einfüllöffnung 1 verschließende Schließlage drehbar ist. In dem Betätigungselement 5 und in dem Auflageteil 3 sind jeweils eine kreisförmige zentrale Öffnung 7, 8 ausgebildet, die mit der Mittelachse 4 fluchten und einen zu dem Einfüllrohr 9 des Einfüllarmes 6 etwas größeren Durchmesser aufweisen. In der dargestellten Schließlage ist die Einfüllöffnung 1 von einem Verschlußteil 10 verschlossen, das unter axialer Vorspannung an einer konzentrisch zur Einfüllöffnung 1 angeordneten und an dem Auflageteil 3 befestigten Ringdichtung 11 anliegt. Das Verschlußteil 10 ist beim Verdrehen des Betätigungselements 5 von der dargestellten Schließlage in eine Offenstellung über eine Verstelleinrichtung geradlinig von der Einfüllöffnung 1 weg in eine Offenstellung verstellbar, in der die Einfüllöffnung 1 vollständig freigegeben ist. Beim manuellen Verdrehen des Betätigungselements 5 ist an einer beispielsweise mit Vertiefungen 12 versehenen Außenfläche 13 ein entsprechendes Moment an dem Betätigungselement 5 zu bewirken. Darüber hinaus sind an einer Innenfläche 14 des Betätigungselements 5 beispielsweise durch achteckförmig angeordnete Flächen oder eine Vielverzahnung Kraftangriffsflächen gebildet, an denen ein mit entsprechenden Gegenflächen 15 versehener Einfüllarm 6 einer automatischen Tankvorrichtung axial in das Betätigungselement 5 einsteckbar ist und an diesem ein Drehmoment zum Öffnen oder Schließen der Einfüllöffnung 1 bewirken kann. Vorzugsweise weist die Innenfläche 14 im Bodenbereich 16 der Ausnehmung 39 nicht dargestellte Hinterschneidungen auf, die ein zur Mittelachse 4 schräges Ansetzen des Einfüllarmes 6 ermöglichen. Damit der Einfüllarm 6 zielsicher an die Einfüllöffnung 1 herangeführt werden kann, ist eine Zielführungseinrichtung vorgesehen, die eine von außen sichtbare Zielmarkierung 17 an dem Verschlußteil 10 erfaßt. Die Zielmarkierung 17 ist beispielsweise durch einen zur Mittelachse 4 konzentrischen Ring gebildet, der in eine entsprechende Vertiefung in dem Verschlußteil 10 eingesetzt ist und an seiner Oberfläche bündig mit dem Verschlußteil 10 verläuft. Das Verschlußteil 10 weist einen Endbereich 18 auf, der in der dargestellten Schließstellung etwas und in der Offenstellung erheblich gegenüber dem Betätigungselement 5 radial hervorsteht. Der Endbereich 18 ist mit einer Signalfarbe 19 markiert, die deutlich sichtbar die Offenstellung des Verschlußteiles 10 anzeigt. Um beim Verdrehen des Betätigungselements 5 die Ringdichtung 11 möglichst wenig zu beanspruchen, ist eine Dichtungs-Entlastungseinrichtung vorgesehen, die anfangs beim Verdrehen des Betätigungselements 5 von der Schließlage in die Offenstellung ein axiales Abheben des Verschlußteiles 10 von der Ringdichtung 11 bewirkt. Die Dichtungs-Entlastungsvorrichtung weist an einem Außen- 20 oder Innenumfang des Auflageteiles 3 oder des Betätigungselements eine mit axialer Steigung in Umfangsrichtung verlaufende Führungsnut 21 auf, in die ein von dem anderen Teil, von dem Betätigungselement 5 oder Auflageteil etwa radial abstehender Führungszapfen 22 oder dergleichen eingreift. Eine Öffnungsdrehbewegung des Betätigungselements 5 erfolgt gegen die Kraft von zwei in einem bogenförmigen Kanal geführten Zugfedern 23, die jeweils an einem Ende an einem Stift 24 eingehängt sind, der an dem Betätigungselement 5 befestigt ist. Das jeweils andere Ende der Zugfeder 23 ist an dem in Fig. 2 erkennbaren Stift 25 eingehängt, der an dem Auflageteil 3 befestigt ist. Der Tankverschluß ist lösbar an dem Rohrstutzen 2 des Kraftstofftanks befestigt. Er kann gegen einen üblichen Tankverschluß beispielsweise eines Kraftfahrzeugs ausgetauscht werden. Hierzu ist lediglich das Auflageteil 3 beim Aufsetzen auf den Rohrstutzen 2 unter Zwischenlage einer Dichtung 41 durch eine Drehung im Uhrzeigersinn mittels des Halterings 26 in Fig. 1 fest mit dem Rohrstutzen 2 zu verrasten. Hierbei bewirkt die Druckfeder 27 über den Federstützring 42 die erforderliche Krafteinleitung auf den Haltering 26, an dem ein Federbügel 40 anliegt. Ein Entfernen des festsitzenden Tankverschlusses ist möglich, indem der gesamte Tankverschluß, insbesondere bestehend aus dem Betätigungsring 5 und Auflageteil 3 vom Rohrstutzen 2 angehoben und im Gegenuhrzeigersinn gedreht wird.

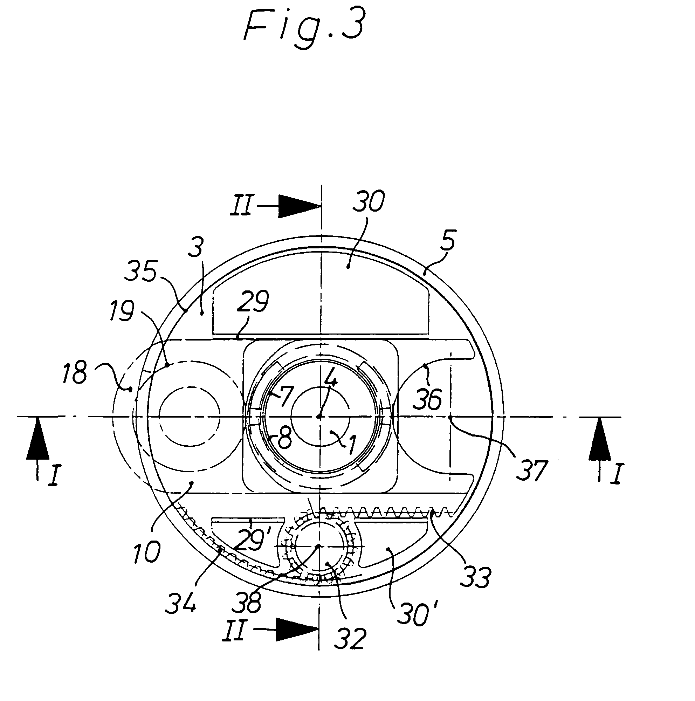

Der in Fig. 2 dargestellten Schnittansicht gemäß der Schnittlinie II-II in Fig. 3 sind weitere Einzelheiten entnehmbar. Zur Verminderung der Reibung zwischen dem Betätigungselement 5 und dem Verschlußteil 10 ist an dem Betätigungselement 5 eine Teflonscheibe 28 befestigt. Zur geradlinigen Führung ist das Verschlußteil 10 zwischen den Schenkeln 29, 29' von abgewinkelten Führungsblechen 30, 30' an dem Auflageteil 3 radial zur Mittelachse 4 der Einfüllöffnung 1 geführt. Die Verstelleinrichtung zur Übertragung der Drehbewegung des Betätigungselements 5 auf das Verschlußteil 10 weist ein um die Achse 38 eines an dem Auflageteil 3 abgestützten Zapfens 31 drehbares Zahnrad 32 auf.

Wie Fig. 3 zu entnehmen ist, kämmt das Zahnrad 32 einerseits mit einer in Bewegungsrichtung des Verschlußteiles 10 verlaufenden Zahnreihe 33 an einem seitlichen Rand des Verschlußteiles 10 und andererseits mit einer Innenverzahnung 34 an einem Innenumfang 35 des Betätigungselements 5. Der Fig. ist außerdem zu entnehmen, daß das Verschlußteil 10 eine etwa halbkreisförmige Randausnehmung 36 aufweist, deren Achse 37 in Offenstellung etwa mit der Mittelachse 4 der Einfüllöffnung 1 und der zentralen Öffnung 7 in dem Betätigungselement 5 sowie mit der zentralen Öffnung 8 in dem Auflageteil 3 fluchtet. Die Drehachse 38 des Zahnrades 32 verläuft parallel zur Mittelachse 4 der Einfüllöffnung 1 seitlich neben dem Verschlußteil 10. Befindet sich das Verschlußteil 10 in seiner Offenstellung, steht der Endbereich 18 von der Außenkontur des Betätigungselements 5 hervor und die mit Signalfarbe 19 gekennzeichnete Markierung zeigt die Offenstellung des Tankverschlusses an, wodurch insbesondere beim manuellen Tanken ein versehentliches Offenlassen des Tankverschlusses vermieden werden kann. Damit beim manuellen Betanken durch die Kraft der insbesondere in Fig. 1 dargestellten Zugfedern 23, 23' das Betätigungselement 5 und damit das Verschlußteil 10 nicht selbsttätig zurückgestellt wird, ist eine nicht dargestellte Halte- oder Rasteinrichtung vorgesehen, die das Verschlußteil 10 in Offenstellung kraft- oder formschlüssig festhält bzw. arretiert. Bei Verwendung einer Rasteinrichtung kann diese ferngesteuert entrastet werden, wodurch bei nicht in die Einfüllöffnung 1 eingesteckter Zapfpistole das Verschlußteil 10 durch die Kraft der Zugfedern 23, 23' selbsttätig in die Schließstellung zurückgestellt wird.

Die Erfindung ist auch von dem Ausführungsbeispiel abweichend ausführbar. Vorzugsweise ist das Verschlußteil exakt geradlinig verstellbar. Ebenso kann das Verschlußteil auch lediglich näherungsweise geradlinig verstellbar sein. Die Verstelleinrichtung zur Übertragung der Drehbewegung des Betätigungselements auf das Verschlußteil kann in unterschiedlicher Weise ausgebildet sein. Beispielsweise kann ein anderer Zahnradmechanismus gegebenenfalls mit zwei Zahnrädern verwendet werden. Ebenso kann anstelle einer Zahnradeinrichtung ein Schwenkhebel und/oder ein Hebelgestänge vorgesehen sein, das mit einem Hebelarm mit dem Betätigungselement und mit einem anderen Hebelarm mit dem Verschlußteil zusammenwirkt. Die Verstelleinrichtung kann auch durch eine Kulissenführung an dem Betätigungselement oder Verschlußteil gebildet sein, in die ein Zapfen oder Steg an dem anderen Teil, an dem Verschlußteil oder Betätigungselement eingreift. Ebenso ist es möglich, daß ein Steg an einem der genannten Teile zwischen zwei Zapfen oder dergleichen an dem anderen Teil geführt ist.

## Patentansprüche

1. Tankverschluß, insbesondere an einem Kraftfahrzeug, mit einem Auflageteil (3), das im Randbereich einer Einfüllöffnung (1) am Tank befestigt ist und um eine zur Mittelachse (4) der Einfüllöffnung etwa parallele Achse drehbar ein Betätigungselement (5) aufnimmt, das manuell und/oder von einem Einfüllarm einer automatischen Tankvorrichtung in eine die Einfüllöffnung freigebende Offenstellung und umgekehrt in eine die Einfüllöffnung verschließende Schließlage drehbar ist,
dadurch gekennzeichnet, daß zwischen dem Auflageteil (3) und dem Betätigungselement (5) ein etwa geradlinig geführtes Verschlußteil (10) angeordnet ist, das mit einer Dichtung (11) zusammenwirkt und das über eine Verstelleinrichtung von dem Betätigungselement (5) verstellbar ist und die Einfüllöffnung (1) in Offenstellung freigibt bzw. in Schließlage verschließt.

2. Tankverschluß nach Anspruch 1,
dadurch gekennzeichnet, daß die Mittelachse (4) die etwa parallele Achse ist.

3. Tankverschluß nach Anspruch 1 oder 2,
dadurch gekennzeichnet, daß das Verschlußteil (10) eine etwa halbkreisförmige Randausnehmung (36) aufweist, deren Achse (37) in Offenstellung etwa mit der Mittelachse (4) der Einfüllöffnung (1) und jeweils einer zentralen Öffnung (7, 8) in dem Auflageteil (3) und in dem Betätigungselement (5) fluchtet.

4. Tankverschluß nach einem der Ansprüche 1 bis 3,
dadurch gekennzeichnet, daß die Verstelleinrichtung ein ortsfest drehbares Zahnrad (32) aufweist, das einerseits mit einer Innenverzahnung (34) an einem Innenumfang (35) des Betätigungselements (5) und andererseits mit einer in Bewegungsrichtung des Verschlußteiles (10) verlaufenden Zahnreihe (33) an dem Verschlußteil (10) kämmt.

5. Tankverschluß nach Anspruch 4,
dadurch gekennzeichnet, daß die Drehachse des Zahnrades (32) etwa parallel zur Mittelachse (4) der Einfüllöffnung (1) seitlich neben dem Verschlußteil (10) verläuft.

6. Tankverschluß nach einem der Ansprüche 1 bis 3,
dadurch gekennzeichnet, daß die Verstelleinrichtung einen Schwenkhebel oder ein Hebelgestänge aufweist, von denen ein Hebelarm mit dem Betätigungselement und ein anderer Hebelarm mit dem Verschlußteil zusammenwirken.

7. Tankverschluß nach einem der Ansprüche 1 bis 3,
dadurch gekennzeichnet, daß die Verstelleinrichtung einen in eine Kulissenführung eingreifenden Zapfen bzw. Steg aufweist, wobei die Kulissenführung an dem Betätigungselement oder Verschlußteil und der Zapfen bzw. Steg an dem anderen Teil, an dem Verschlußteil oder Betätigungselement ausgebildet sind.

8. Tankverschluß nach einem der Ansprüche 1 bis 7,
dadurch gekennzeichnet, daß das Verschlußteil (10) zwischen den Schenkeln (29, 29') von abgewinkelten Führungsblechen (30, 30') etwa radial zur Mittelachse (4) der Einfüllöffnung (1) geführt ist.

9. Tankverschluß nach einem der Ansprüche 1 bis 8,
dadurch gekennzeichnet, daß das Verschlußteil (10) einen in Offenstellung radial vorstehenden Endbereich (18) aufweist, der mit Signalfarbe (19) markiert ist.

10. Tankverschluß nach einem der Ansprüche 1 bis 9,
dadurch gekennzeichnet, daß das Verschlußteil (10) eine Zielmarkierung (17) aufweist, die in Schließlage etwa mit der Einfüllöffnung (1) fluchtet und durch die zentrale Öffnung (7) im Betätigungselement (5) von außen sichtbar ist.

11. Tankverschluß nach einem der Ansprüche 1 bis 10,
dadurch gekennzeichnet, daß eine Dichtungs-Entlastungseinrichtung anfangs beim Verdrehen des Betätigungselements (5) von der Schließlage in die Offenstellung ein axiales Abheben des Verschlußteiles (10) von einer etwa konzentrisch zur Einfüllöffnung (1) an dem Auflageteil (3) befestigten Ringdichtung (11) bewirkt.

12. Tankverschluß nach Anspruch 11,
dadurch gekennzeichnet, daß die Dichtungs-Entlastungseinrichtung an einem Außen- (20) oder Innenumfang des Auflageteiles (3) oder des Befestigungselements eine mit axialer Steigung in Umfangsrichtung verlaufende Führungsnut (21) aufweist, in die ein von dem anderen Teil, von dem Betätigungselement (5) oder Auflageteil etwa radial abstehender Führungszapfen (22) oder dergleichen eingreift.

## Claims

1. A tank closure, especially on a motor vehicle, comprising a bearing part (3) fastened in the edge region of a filling opening (1) on the tank and receiving an actuating element (5) so that it can rotate around an axis approximately parallel to the central axis (4) of the filling opening and can be rotated manually and/or by a filling arm of an automatic tank-filling device into an open position for uncovering the filling opening or conversely into a closing position for closing the filling opening,
characterised in that an approximately straight closure part (10) is disposed between the bearing part (3) and the actuating element (5) and co-operates with a seal (11) which is adjustable by the actuating element (5) via an adjusting device and uncovers the filling opening (1) in the open position and closes it in the closed position.

2. A tank closure according to claim 1, characterised in that the central axis (4) is the approximately parallel axis.

3. A tank closure according to claim 1 or claim 2, characterised in that the closure part (10) has an approximately semicircular edge recess (36) whose axis (37) in the open position is approximately in line with the central axis (4) of the filling opening (1) and with a central opening (7, 8) in the bearing part (3) and in the actuating element (5) respectively.

4. A tank closure means according to any of claims 1 to 3, characterised in that the adjusting device comprises a non-displaceable rotatable gearwheel (32) which meshes on the one hand with inner teeth (34) on an inner periphery (35) of the actuating element (5) and on the other hand with a row of teeth (33) on the closure part (10) extending in the direction of motion of the closure part (10).

5. A tank closure according to claim 4, characterised in that the axis of rotation of the gearwheel (32) extends approximately parallel to the central axis (4) of the filling opening (1), laterally near the closure part (10).

6. A tank closure according to any of claims 1 to 3, characterised in that the adjusting device comprises a rocking lever or a lever linkage, one arm of the lever co-operating with an actuating element and another arm co-operating with the closure part.

7. A tank closure according to any of claims 1 to 3, characterised in that the adjusting device comprises a pin or web which engages in a slotted guide, the slotted guide being formed on the actuating element or closure part and the pin or web being formed on the other part, on the closure part or actuating element.

8. A tank closure according to any of claims 1 to 7, characterised in that the closure part (10) is guided between the limbs (29, 29') of bent metal guide sheets (30, 30'), approximately radially relative to the central axis (4) of the filling opening (1).

9. A tank closure according to any of claims 1 to 8, characterised in that the closure part (10) has an end region (18) which projects radially in the open position and is marked by a distinguishing colour (19).

10. A tank closure according to any of claims 1 to 9, characterised in that the closure part (10) has a target marking (17) which is approximately in line with the filling opening (1) in the closed position and is externally visible through the central opening (7) in the actuating element (5).

11. A tank closure according to any of claims 1 to 10, characterised in that initially when the actuating element (5) rotates from the closed position into the open position a seal relief means axially raises the closure part (10) from a circumferential seal (11) fastened to the bearing part (3) concentrically with the filling opening (1).

12. A tank closure according to claim 11, characterised in that on an outer (20) or inner periphery of the bearing part (3) or of the fastening element, the seal relief means has a guide groove (21) which extends with axial pitch in the peripheral direction and engages a guide pin (22) or the like projecting approximately radially from the other part, from the actuating element (5) or bearing part.

## Revendications

1. Fermeture de réservoir, notamment pour véhicule, comprenant une partie d'appui (3) fixée sur le bord d'une ouverture de remplissage (1) du réservoir et recevant un élément d'actionnement (5) pouvant tourner autour d'un axe sensiblement parallèle à l'axe central (4) de l'ouverture (1), cette rotation, opérée manuellement et/ou par un bras de remplissage d'un dispositif automatique d'alimentation du réservoir, ayant pour effet d'amener l'élément dans une position d'ouverture libérant l'ouverture de remplissage,
caractérisée en ce qu'
entre la partie d'appui (3) et l'élément d'actionnement (5) est montée une pièce de fermeture (10) guidée à peu près en ligne droite, qui coopère avec un joint d'étanchéité (11) et que l'élément d'actionnement (5) peut déplacer par l'intermédiaire d'un dispositif de déplacement, et qui libère l'ouverture de remplissage (1) en position d'ouverture ou l'obture en position de fermeture.

2. Fermeture de réservoir selon la revendication 1 ou 2,
caractérisée en ce que
l'axe central (4) est l'axe sensiblement parallèle.

3. Fermeture de réservoir selon la revendication 1 ou 2,
caractérisée en ce que
la pièce de fermeture (10) présente un évidement marginal (36) ayant à peu près la forme d'un demi-cercle, dont l'axe (37), en position d'ouverture, est à peu près aligné avec l'axe central (4) de l'ouverture de remplissage (1) et également avec les axes d'ouvertures centrales (7, 8) pratiquées respectivement dans la partie d'appui (3) et dans l'élément d'actionnement (5).

4. Fermeture de réservoir selon l'une quelconque des revendications 1 à 3,
caractérisée en ce que
le dispositif de déplacement comprend un pignon denté (32) tournant autour d'un point fixe et venant en prise d'une part avec une denture interne (34) portée par la périphérie interne (35) de l'élément d'actionnement (5), et d'autre part avec une réglette dentée (33) portée par la pièce de fermeture (10) et orientée selon la direction de déplacement de la pièce de fermeture (10).

5. Fermeture de réservoir selon la revendication 4,
caractérisée en ce que
l'axe de rotation du pignon denté (32) est a peu près parallèle à l'axe central (4) de l'orifice de remplissage (1) et situé sur le côté, près de la pièce de fermeture (10).

6. Fermeture de réservoir selon l'une quelconque des revendications 1 à 3,
caractérisée en ce que
le dispositif de déplacement comporte un levier oscillant ou une tige de levier dont un bras de levier coopère avec l'élément d'actionnement et dont l'autre bras de levier coopère avec la pièce de fermeture.

7. Fermeture de réservoir selon l'une quelconque des revendications 1 à 3,
caractérisée en ce que
le dispositif de déplacement comporte un pivot ou une barrette engagé dans un guidage coulissant se trouvant sur l'élément d'actionnement ou la pièce de fermeture, tandis que le pivot ou la barrette se trouve sur l'autre partie c'est-à-dire sur la pièce de fermeture ou sur l'élément d'actionnement.

8. Fermeture de réservoir selon l'une quelconque des revendications 1 à 7,
caractérisée en ce que
la pièce de fermeture (10) est guidée entre les ailes (29, 29') de tôles de guidage (30, 30') coudées à peu près radialement par rapport à l'axe central (4) de l'ouverture de remplissage (1).

9. Fermeture de réservoir selon l'une quelconque des revendications 1 à 8,
caractérisée en ce que
la pièce de fermeture (10) présente une partie d'extrémité (18) qui, en position d'ouverture, dépasse et porte un marquage fait d'une couleur de signalisation (19).

10. Fermeture de réservoir selon l'une quelconque des revendications 1 à 9,
caractérisée en ce que
la pièce de fermeture (10) présente un repérage (17) qui, en position de fermeture est aligné sensiblement avec l'ouverture de remplissage (1) et peut être vu de l'extérieur à travers l'ouverture centrale (7) de l'élément d'actionnement (5).

11. Fermeture de réservoir selon l'une quelconque des revendications 1 à 10,
caractérisée en ce qu'
un dispositif de décharge d'étanchéité, dès que l'élément d'actionnement (5) commence à tourner pour passer de la position de fermeture à celle d'ouverture, sépare la pièce de fermeture (10), par soulèvement axial, d'un joint annulaire d'étanchéité (11) fixé sur la partie d'appui (3), à peu près concentriquement avec l'ouverture de remplissage (1).

12. Fermeture de réservoir selon la revendication 11,
caractérisée en ce que
le dispositif de décharge d'étanchéité présente, sur la périphérie externe (20) de la partie d'appui (3) ou sur la périphérie interne de l'élément d'actionnement, une rainure de guidage (21) disposée périphériquement avec inclinaison axiale et dans laquelle est engagé un pivot de guidage (22) issu de l'autre partie c'est-à-dire de l'élément d'actionnement (5) ou de la partie d'appui (3), et faisant saillie à peu près radialement.
